**Europäisches Patentamt**

**European Patent Office**

**Office européen des brevets**

(19)

(11) Numéro de publication : **0 345 187 B1**

(12)

# FASCICULE DE BREVET EUROPEEN

(45) Date de publication du fascicule du brevet :
**24.06.92 Bulletin 92/26**

(51) Int. Cl.⁵ : **B60P 3/08**

(21) Numéro de dépôt : **89440047.2**

(22) Date de dépôt : **30.05.89**

(54) **Ensemble unitaire porteur à plateaux individuels mobiles en mouvements composés multiples pour véhicules porte-voitures.**

(30) Priorité : **31.05.88 FR 8807385**

(43) Date de publication de la demande :
**06.12.89 Bulletin 89/49**

(45) Mention de la délivrance du brevet :
**24.06.92 Bulletin 92/26**

(84) Etats contractants désignés :
**AT BE CH DE ES GB IT LI LU NL**

(56) Documents cités :
**EP-A- 0 001 364
CH-A- 593 157
DE-C- 1 134 334
FR-A- 1 373 916
GB-A- 931 790**

(73) Titulaire : **LOHR INDUSTRIE S.A.
29, rue du 14 Juillet
F-67980 Hangenbieten (FR)**

(72) Inventeur : **Andre, Jean-Luc
151, route du Vin
F-67310 - Dangolsheim (FR)**

(74) Mandataire : **Metz, Paul
Cabinet METZ PATNI 63, rue de la Ganzau
F-67100 Strasbourg (FR)**

## Description

La présente invention se rapporte à un ensemble unitaire porteur et de levage comprenant au moins un plateau individuel mobile porteur pour la constitution d'un véhicule porte-voitures.

Selon la caractéristique générale de cet ensemble unitaire porteur, chaque plateau individuel est susceptible de mouvements transversaux et longitudinaux par rapport aux poteaux de soutien et de mouvements en inclinaison par rapport à l'horizontale à partir d'un moyen moteur unique propre à chaque plateau individuel.

L'utilisation de plateaux individuels confère une plus grande souplesse dans le chargement et la possibilité d'imbriquer les véhicules sur un même porteur.

Toutefois, pour pouvoir tirer tous les avantages de cette caractéristique, il convient, pour réussir un chargement de bonne rentabilité, de réaliser de la façon la plus simple et la plus rapide, toutes les positions en levage et toutes les inclinaisons à partir d'un seul moyen mécanique de commande.

Il s'agit précisément de l'objectif de la présente invention.

Les plateaux individuels porteurs existant actuellement sont montés mobiles verticalement à l'aide de vérins, (un tel ensemble est connu par exemple du FR-A-1373 916) le long d'ensembles télescopiques ou d'éléments rectilignes profilés faisant partie d'un bâti, sur la base desquels ils prennent appui.

L'inclinaison de ces plateaux est fixe ou assurée par des vérins obliques, jumelés à une structure de coulissement fixée par une de ses extrémités au châssis du véhicule tracteur ou de sa remorque et par son autre extrémité à des éléments supérieurs d'ossature.

Les inconvénients de ce type de plateaux individuels et de leur commande en mouvements s'avèrent multiples :

. toutes les commandes sont réalisées par vérins occasionnant ainsi une plus-value importante et nécessitant un groupe hydraulique puissant ;

. le bras de levier trop important nécessite l'emploi de vérins de gros calibre ;

. chaque vérin est doublé d'une structure de coulissement le long de laquelle il se déplace ;

. l'appui des vérins obliques doit être dissocié de la structure coulissante en mouvement vers le haut d'où des difficultés de construction ;

. les liaisons hydrauliques d'alimentation des vérins en fluide moteur constituent un réseau de conduits flexibles onéreux et difficile à installer ;

. ce réseau comporte des boucles lâches représentant une gêne certaine à la manoeuvre et au passage du personnel ;

. les vérins se présentent tige sortie lors du transport. Celle-ci, exposée aux intempéries, aux projections et aux chocs, risque de se détériorer ;

. pour les mouvements de grande amplitude (niveau supérieur) la course des vérins à simple extension s'avère insuffisante ; on doit adopter des vérins à double extension, onéreux, lourds et fragiles ;

. pour les autres mouvements réalisés par des vérins à simple extension, ceux-ci doivent présenter une faible longueur.

La présente invention a pour but de remédier à ces inconvénients en proposant un ensemble unitaire porteur tel que défini dans la revendication 1.

De nombreux avantages découlent des particularités techniques de l'ensemble porteur selon l'invention dont les principaux sont indiqués ci-après :

. possibilité de positions et d'inclinaisons multiples par un moyen de manoeuvre unique par poteau pour toutes les positions et les inclinaisons ;

. réalisation simple ;

. solidité mécanique ;

. possibilité de réaliser pratiquement toutes les imbrications entre des véhicules à des niveaux différents ;

. l'utilisation d'un moyen de manoeuvre irréversible n'oblige pas à la doubler d'une sécurité ;

. les mouvements en déplacement de levage et en inclinaison sont variables en continu ;

. la fiabilité est augmentée par l'utilisation d'un seul moyen de manoeuvre.

La présente invention sera bien comprise à la lecture de la description qui suit, effectuée à titre d'exemple non limitatif sur un mode d'exécution en référence aux dessins accompagnants dans lesquels :

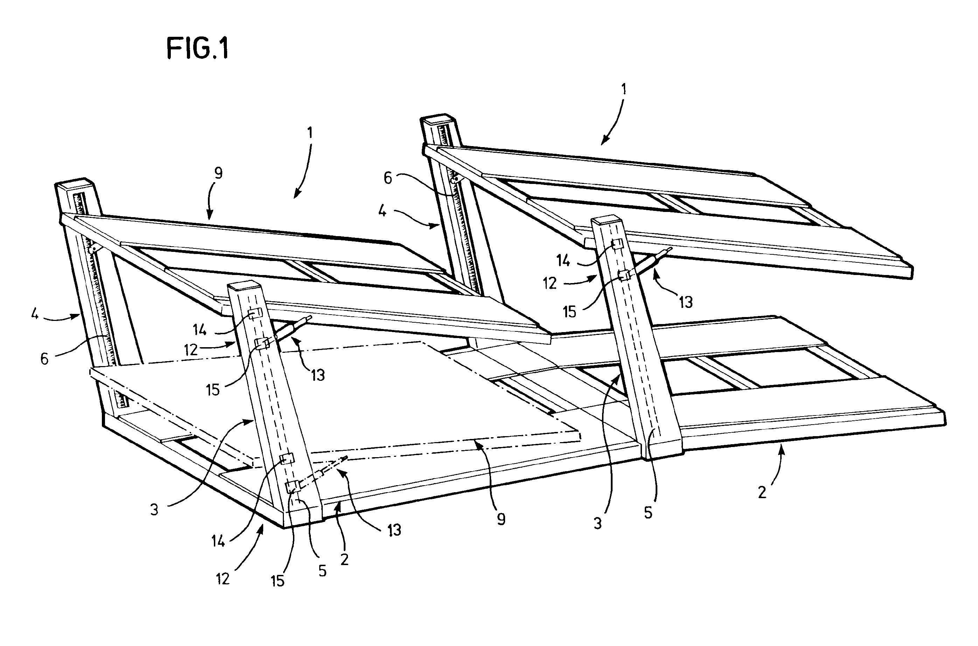

– la figure 1 est une vue générale illustrative en perspective de deux ensembles porteurs conformes à l'invention comprenant pour l'un, deux plateaux mobiles en position haute et en position basse et pour l'autre un plateau mobile en position haute;

– la figure 2 est une vue en perspective simplifiée d'un poteau, du plateau et du mécanisme de levage, selon une variante à écrou supérieur, à douille de translation inférieure reliés rigidement entre eux et à bielle télescopique avec grossissement sur l'écrou supérieur ;

– la figure 3 est le schéma correspondant de fonctionnement illustrant deux positions extrêmes du plateau mobile, l'une haute et l'autre basse ;

– la figure 4 est une vue en perspective simplifiée d'un poteau, du plateau et du mécanisme de levage, selon une variante à écrou inférieur et à douille de translation supérieure, ensemble à écartement variable, et bielle de longueur fixe avec grossissement sur la douille de translation ;

– la figure 5 est un schéma correspondant de fonctionnement illustrant deux positions extrêmes du plateau mobile, l'une haute et l'autre basse ;

– la figure 6 est une vue en perspective simplifiée d'un poteau, du plateau et du mécanisme de levage, selon une variante à écrou débrayable supérieur, à écrou simple inférieur et à bielle de longueur fixe avec grossissement sur l'écrou débrayable;

– La figure 7 est un schéma correspondant de fonctionnement illustrant les deux positions extrêmes du plateau mobile, l'une haute et l'autre basse ;

– la figure 8 est une vue en perspective simplifiée d'un poteau, du plateau et du mécanisme de levage, selon une variante à deux écrous et bielle de longueur variable ;

– la figure 9 est le schéma correspondant du fonctionnement illustrant deux positions extrêmes du plateau mobile, l'une haute et l'autre basse ;

– la figure 10 est une vue en perspective simplifiée d'un poteau, du plateau et du mécanisme de levage, selon une variante à deux écrous et bielle de longueur fixe ;

– la figure 11 est le schéma correspondant du fonctionnement illustrant deux positions extrêmes du plateau mobile, l'une haute et l'autre basse ;

– la figure 12 est une vue en perspective simplifiée d'un poteau, du plateau et du mécanisme de levage selon une variante à écrou supérieur, à douille de translation inférieure, reliés rigidement entre eux, et à bielle de longueur fixe ;

– la figure 13 est un schéma correspondant de fonctionnement illustrant les deux positions extrêmes du plateau mobile, l'une haute et l'autre basse ;

– la figure 14 est une vue en perspective simplifiée d'un poteau, du plateau et du mécanisme de levage selon une variante à deux écrous débrayables, et à bielle de longueur fixe complété par un mécanisme de coulissement du plateau constitué par un écrou simple relié au plateau par une bielle de longueur fixe ;

– la figure 15 est un schéma correspondant du fonctionnement illustrant une position du plateau mobile, et par l'intermédiaire de flèches, les divers déplacements possibles ;

– les figures 16 et 17 sont des vues schématiques de profil illustrant deux exemples de réalisation d'ensembles porteurs à simple poteau et à double poteau ;

– les figures 18 et 19 sont des vues analogues, voitures chargées.

L'idée générale inventive consiste à prévoir, pour un ensemble unitaire porteur à deux poteaux de soutien, au moins un plateau mobile par rapport aux poteaux, plateau dont les mouvements sont commandés par une force motrice extérieure unique à travers un mécanisme de liaison et un élément rectiligne moteur propre à chaque poteau sur lequel ledit mécanisme est monté. Les positions et les inclinaisons de fin de course haute et basse sont prédéterminées par le jeu du mécanisme de liaison associé à l'élément rectiligne moteur et de butées ou de points d'appui.

Les moyens généraux utilisés pour mettre en oeuvre l'idée générale inventive exposée ci-dessus comprennent, outre les deux poteaux de soutien et au moins un plateau individuel mobile, une vis dans chaque poteau, unique et propre à chaque poteau, vis faisant office d'élément rectiligne moteur et actionnée par une force motrice indépendante unique à travers le mécanisme de liaison et porteur convertissant la rotation de la vis en mouvements de déplacement par rapport aux poteaux et en variations d'inclinaison du plateau.

On examinera plus particulièrement ci-après les diverses possibilités de réaliser les fonctions ci-dessus et leurs variantes directes.

En se référant à l'ensemble des figures, les moyens de base de la présente invention peuvent être énoncés comme suit.

On réalise un ensemble unitaire porteur 1 en solidarisant à un châssis 2 deux poteaux de soutien 3 et 4 parallèles entre eux et verticaux ou légèrement inclinés. Chaque poteau de soutien renferme au moins une vis telle que 5 ou 6 sur laquelle est monté un mécanisme de liaison et porteur et, plus particulièrement, un dispositif de translation 7 ou 8.

La vis est unique par poteau et actionnée par une force motrice unique propre à chaque plateau lui-même associé à son mécanisme de liaison et porteur.

Les deux dispositifs de translation 7 et 8 assurent la liaison de soutien à pivotement et, le cas échéant, à pivotement-coulissement avec un plateau mobile porteur 9, de forme classique ou de caractéristiques particulières par l'intermédiaire d'un axe de pivotement 10 ou 11 associé, le cas échéant, à un bloc de coulissement.

Le plateau mobile 9 est susceptible de mouvements composés en inclinaison et en déplacement par rapport aux poteaux longitudinalement et transversalement à ceux-ci par la seule commande en actionnement simultané des vis 5 et 6 à partir de la seule et unique force motrice, par exemple un moteur électrique.

L'emplacement exact de l'axe de pivotement 10 ou 11 du plateau avec le dispositif de translation et de pivotement correspondant 7 ou 8 importe peu dans la mesure où celui-ci ne conditionne pas la nature des mouvements.

On décrira maintenant de façon générale le dispositif de translation et de pivotement.

Celui-ci se compose d'un ensemble mobile de translation 12 le long de la vis correspondante et porté par celle-ci ainsi qu'une liaison articulée inclinée 13 reliant le plateau à l'ensemble mobile.

L'ensemble mobile de translation 12 est constitué d'un bloc supérieur 14 et d'un bloc inférieur 15 montés sur la même et unique vis 5 ou 6 par poteau et par plateau. Le bloc supérieur 14 assure la liaison à pivotement avec le plateau et le bloc inférieur assure l'articulation de pivotement avec une extrémité de la liaison articulée inclinée 13 afin de réaliser un ensemble triangulaire articulé à trois points de pivotement.

Pour des raisons de clarté, les trois points d'articulation seront désignés par les lettres A, B, C se rapportant respectivement aux points situés sur les blocs 14 et 15 et sur le plateau à l'extrémité de la liaison inclinée 13.

La présente invention couvre les différentes variantes de mécanismes de liaison et porteur, représentés sur les figures de 2 à 15. Il s'agit des variantes suivantes :
– figures 2 et 3 :
    AB de longueur constante
    BC de longueur variable
permettant tous les mouvements de translation et de pivotement du plateau ;
– figures 4 et 5 :
    AB de longueur variable
    BC de longueur fixe
permettant tous les mouvements de translation et de pivotement du plateau ;
– figures 6 et 7 :
    AB de longueur variable
    BC de longueur fixe
permettant tous les mouvements de translation et de pivotement du plateau ;
– figures 8 et 9 :
    AB de longueur constante
    BC de longueur variable
permettant tous les mouvements de translation et de pivotement du plateau ;
– figures 10 et 11 :
    AB de longueur constante
    BC de longueur constante
permettant un simple déplacement parallèle du plateau;
– figures 12 et 13 :
    AB de longueur constante
    BC de longueur constante
permettant un simple déplacement parallèle du plateau;
– figures 14 et 15 :
    AB de longueur variable
    BC de longueur constante
associés à un mécanisme de coulissement du plateau, permettant tous les mouvements souhaités du plateau par rapport à un axe horizontal.

Comme on le verra ci-après, selon les variantes, les blocs 14 et 15 seront de constitution différentes de manière à permettre la variation de distance entre A et B et, le cas échéant, la variation de longueur de la liaison BC.

Selon le cas, les éléments portés par les vis sont des écrous 16 en prise permanente ou sélective avec la vis ou des douilles de coulissement 17.

Les cages telles que 18 et 19 respectivement des écrous et des douilles sont habillées latéralement de patins 20 et 21 coulissant le long des poteaux 2 et 3 afin d'assurer l'immobilisation de l'écrou en rotation sur lui-même puis le guidage et la stabilité des mouvements longitudinaux.

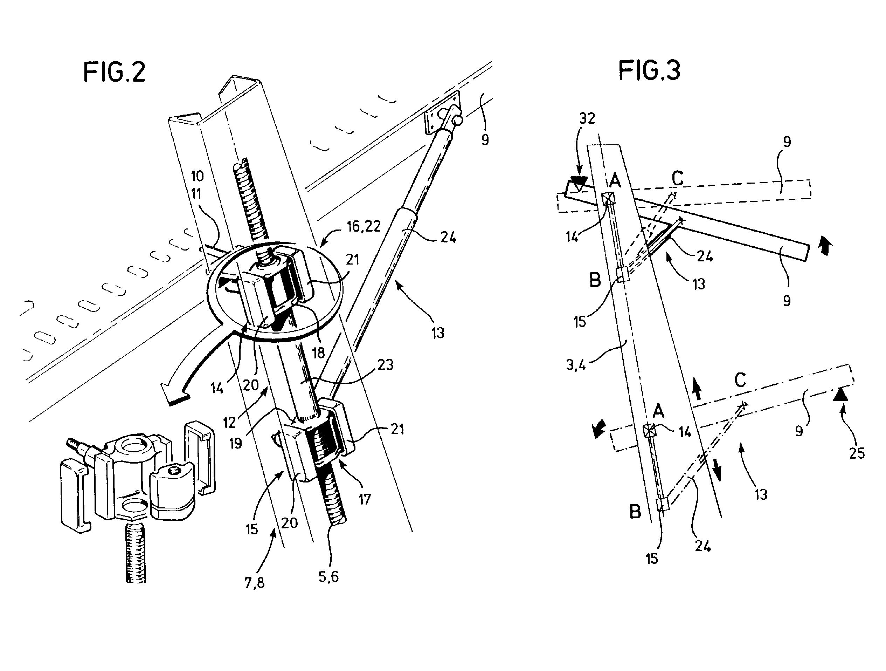

Selon le mode de réalisation de la figure 2, le bloc supérieur 14 est un écrou 22 en prise permanente avec la vis. La cage 18 de celui-ci est reliée de façon rigide par un tube 23 à la cage 19 du bloc inférieur. Ce dernier est une douille de coulissement 17 traversée par la vis. Ainsi, la distance AB est maintenue mécaniquement constante.

La cage 19 de la douille 17 porte l'articulation B de la liaison inclinée 13. Celle-ci, selon ce mode d'exécution, est extensible, réalisée par exemple sous la forme d'une bielle télescopique 24 ou par un vérin qui en constitue un équivalent fonctionnel.

La rotation sur la vis agit sur l'écrou 22 qui se déplace par translation vers le haut ou vers le bas entraînant dans ses mouvements le long du poteau correspondant la douille de coulissement 17 de par son assujettissement avec elle par le tube 23.

La distance AB restant constante, les mouvements d'inclinaison sont réalisés par l'extension ou le retrait de la bielle télescopique 24 qui peut être une bielle active, vérin ou autre, ou par le jeu d'une butée inférieure 25 disposée en partie basse en extrémité du plateau pour déterminer une inclinaison de fin de course basse, par exemple une inclinaison correspondant à la position de chargement du véhicule.

Le poids du véhicule chargé amènera automatiquement la bielle en position rétractée c'est-à-dire la distance BC à sa valeur minimale après une phase intermédiaire de levage au cours de laquelle le plateau s'incline vers le bas.

Dans les modes de réalisation des figures de 4 à 7, la liaison inclinée 13 correspond à une distance BC constante réalisée par exemple sous la forme d'une bielle rigide 26 c'est-à-dire de longueur fixe.

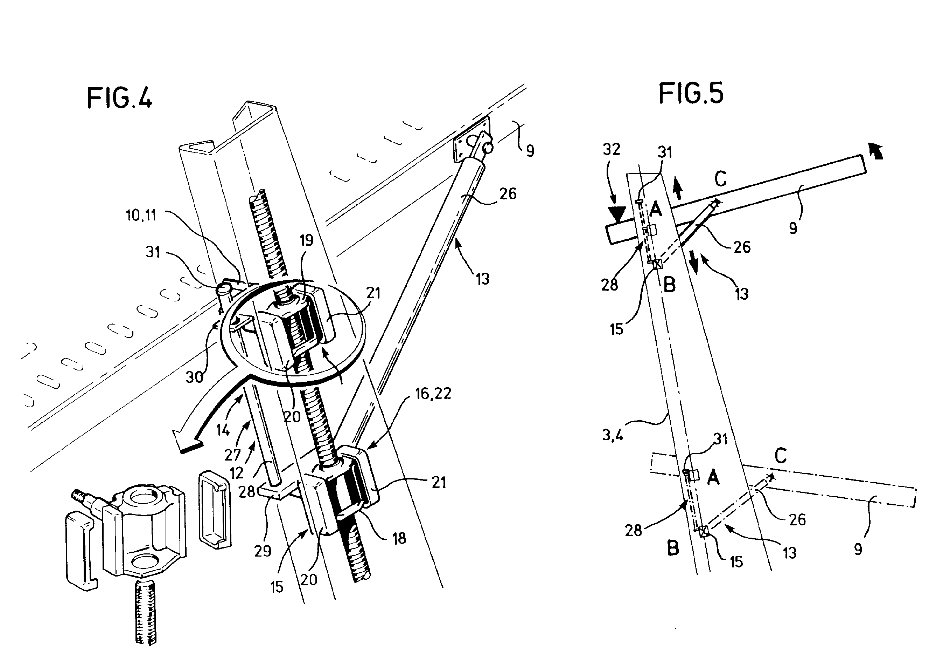

Les variations d'inclinaison sont données par les augmentations ou les diminutions de la distance AB réalisées selon deux façons différentes correspondant aux variantes représentées sur les figures 4, 5 et 6,7.

La première variante comporte les mêmes blocs, écrou 22 et douille de coulissement 17, que celle précédemment décrite.

Selon un mode préféré, la disposition est inverse : écrou 22 en position inférieure et douille de coulissement 17 en position supérieure.

On établit simplement une liaison extérieure 27 de butée sous la forme, par exemple, d'une tige rigide 28 solidarisée à l'une de ses extrémités à la cage 18 de l'écrou 22 par l'intermédiaire d'une platine 29 de raccordement et guidée à coulissement par une patte 30 solidaire de la cage 19 de la douille de coulissement 17 ou tout autre moyen équivalent, par exemple une chaîne ou un câble.

Afin de limiter l'écartement des deux blocs, on prévoit une butée, par exemple un renflement 31 en extrémité de tige 28 ou tout autre moyen.

En fonctionnement, la distance AB s'établit à sa valeur maximale par le poids du plateau à vide ou chargé se répercutant par le jeu du couple de pivotement sur la douille en position supérieure, provoquant la remontée corrélative de celle-ci le long de la vis sur une distance se terminant à la butée d'extrémité 31 de la tige 28 déterminant ainsi l'inclinaison du plateau dans sa position extrême basse.

Cette inclinaison se maintient en phase de montée-levage jusqu'à la position de fin de course haute du plateau par le jeu d'un point haut d'appui, par exemple une butée 32, contre laquelle vient porter l'extrémité de la face supérieure du plateau pour le faire basculer vers le haut, ( comme représenté par les flèches ), par l'effet du couple résultant de la poussée vers le haut de l'écrou inférieur.

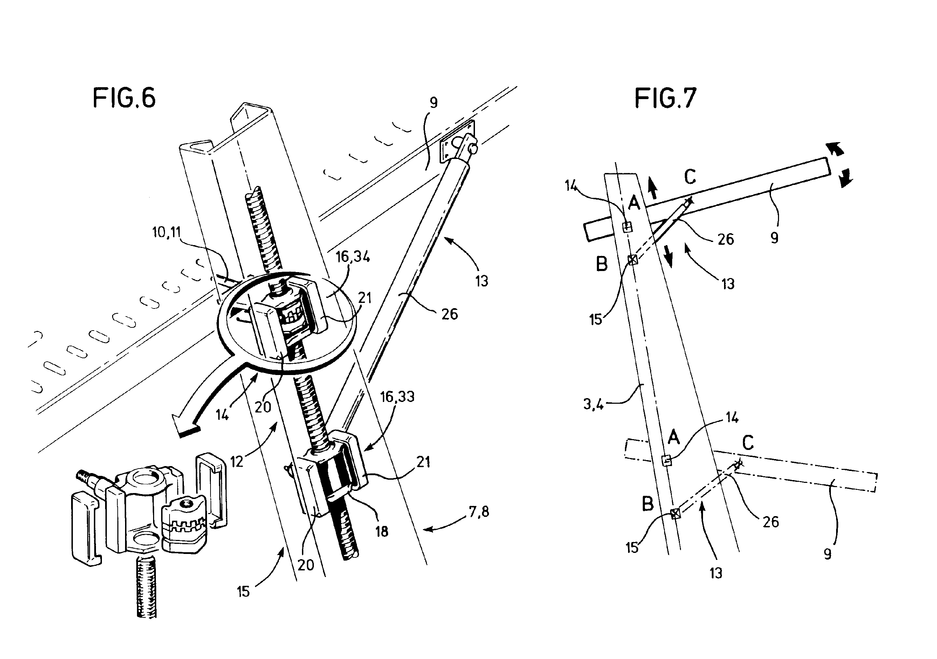

La variante représentée sur les figures 6 et 7 procure les mêmes effets sans nécessiter la présence d'une butée de basculement en position haute.

Elle comporte un bloc inférieur 15 sous la forme d'un écrou 33 analogue à l'écrou 22 en prise permanente sur la vis. Le bloc supérieur est un écrou débrayable 34 connu, par exemple du type de celui imaginé et protégé par le déposant.

Cet écrou débrayable 34 permet une prise sélective de l'écrou sur la vis à partir d'une commande extérieure de libération ou de mise en prise. Ainsi, en agissant simplement sur cette commande, on peut, par mise en prise ou libération, faire varier la distance AB pendant la rotation de la vis et déterminer ainsi l'inclinaison du plateau.

En réalité, seules les inclinaisons de fin de course haute et basse sont exploitées dans l'utilisation en porte-véhicules. En effet, l' inclinaison de position basse correspond au chargement c'est-à-dire à la montée du véhicule sur le plateau et l'inclinaison de position haute à la présentation du véhicule lors du transport.

Il suffit alors de programmer la commande de l'écrou débrayable avant l'arrivée dans ces positions extrêmes, haute et basse, pour que l'inclinaison se trouve à sa valeur prédéterminée en fin de course haute et basse.

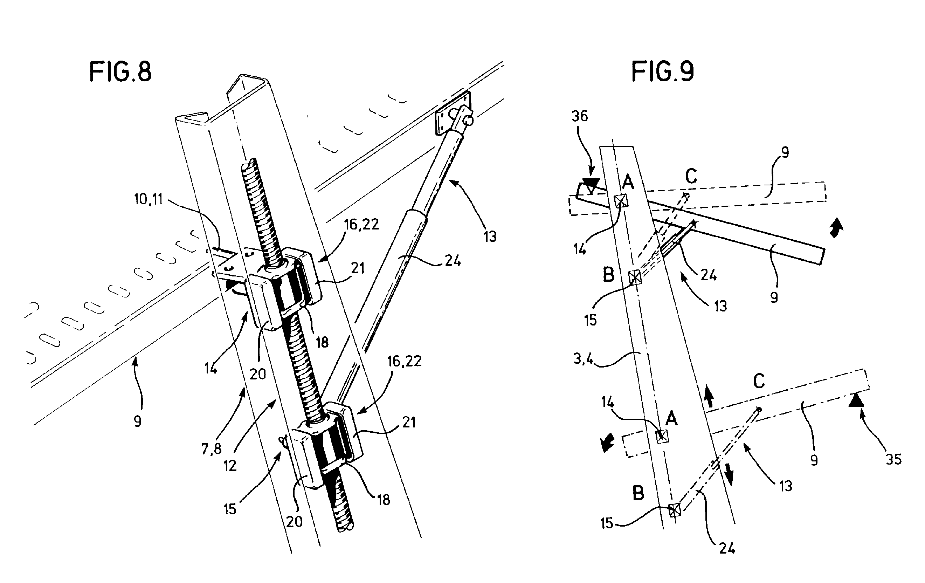

Une autre variante représentée sur les figures 8 et 9 présente des blocs, supérieur 14 et inférieur 15, identiques réalisés sous la forme d'écrous tels que ceux référencés 22. La liaison inclinée 13 est de longueur variable sous la forme d'une bielle télescopique, par exemple celle déjà référencée 24 ou d'un vérin.

Ces écrous, de pas identique, entraînés par la même vis, se déplacent à distance constante l'un de l'autre. AB reste donc de longueur constante.

BC étant variable, on retrouve une configuration de fonctionnement en position du plateau, analogue à celle de la première variante. Les mouvements en inclinaison du plateau sont réalisés par l'extension ou le retrait de la bielle télescopique 24 ou de son vérin de remplacement.

Ainsi, en position basse le contact avec une butée basse 35 débute l'inclinaison et c'est la longueur d'extension de la bielle qui détermine l'amplitude de l'inclinaison et la présentation finale de fin de course basse du plateau correspondant à la position de chargement du véhicule.

Comme pour la première variante, le poids du véhicule chargé amènera automatiquement la bielle télescopique en position rétractée vers le bas c'est-à-dire la distance BC à sa valeur minimale après la poursuite d'un premier déplacement de levage qui soulèvera le plateau de son appui bas de butée.

Le plateau s'inclinera d'autant pour garder cette inclinaison jusqu'en position haute de fin de course où une éventuelle deuxième butée 36 représentée en pointillés pourra relever le plateau par basculement.

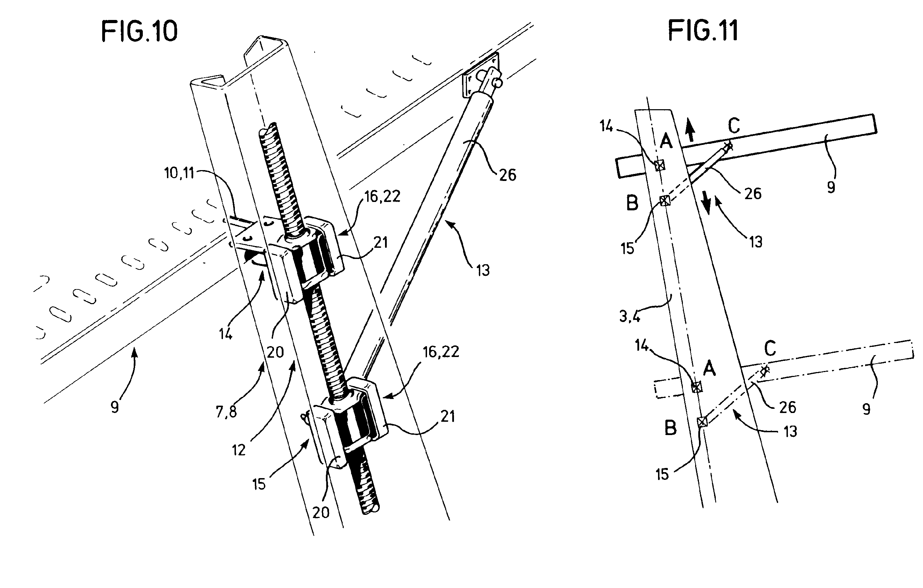

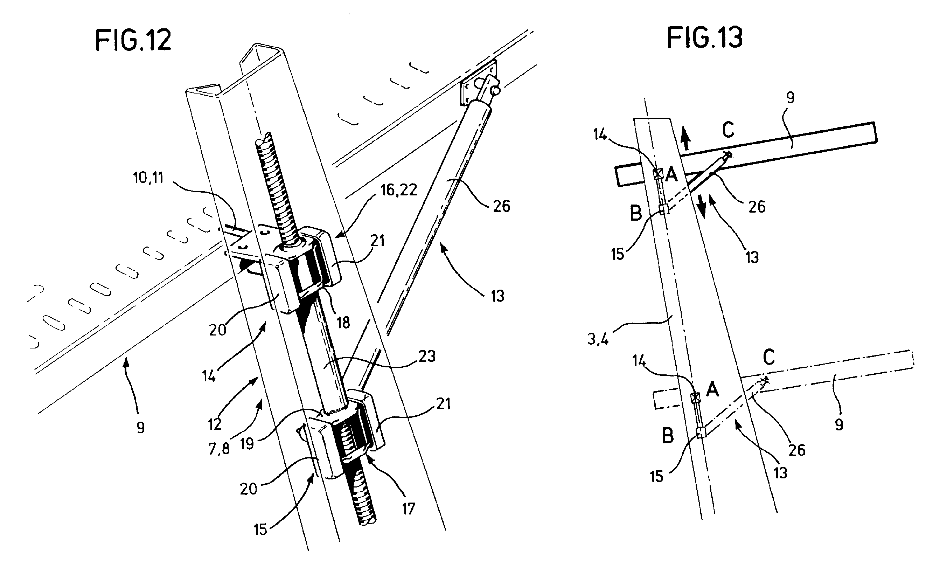

Les variantes représentées sur les figures 10, 11 et 12, 13 sont des variantes simplifiées qui ne permettent qu'une translation à inclinaison fixe.

En effet, selon ces variantes, les deux blocs, supérieur 14 et inférieur 15, sont soit identiques, réalisés sous la forme d'écrous tels que ceux déjà référencés 22, soit différents, reliés par un tube rigide, par exemple celui déjà référencé 23. La liaison inclinée 13 présente chaque fois une bielle de longueur fixe 26.

Les écrous, de pas identique, entraînés par la même vis, se déplacent à distance constante l'un de l'autre, AB et BC restant de longueur constante, les mouvements de la vis engendrent un déplacement longitudinal d'ensemble en translation le long des poteaux.

De même, le tube 23 assujettit les blocs 14 et 15 à rester à une distance constante l'un de l'autre.

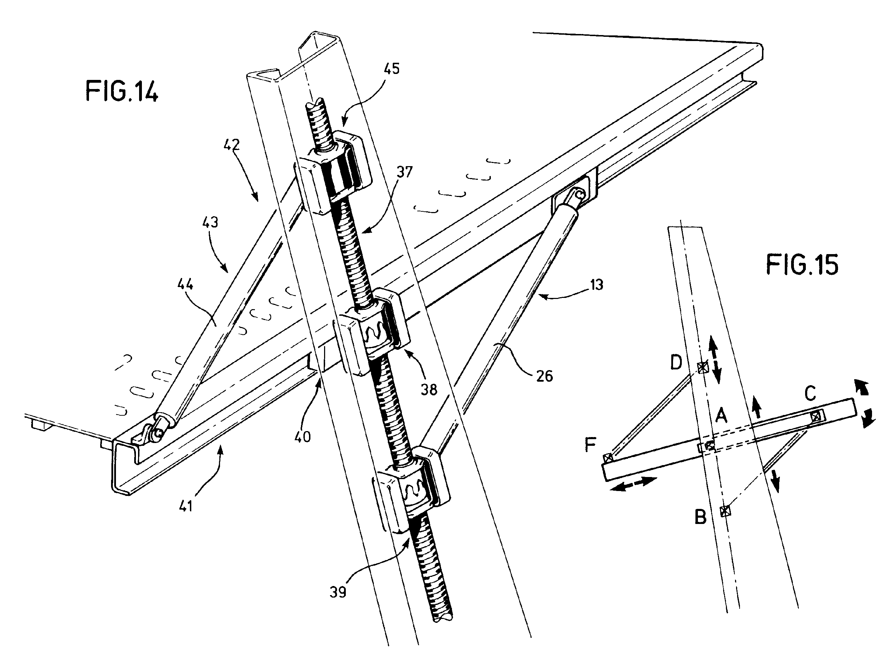

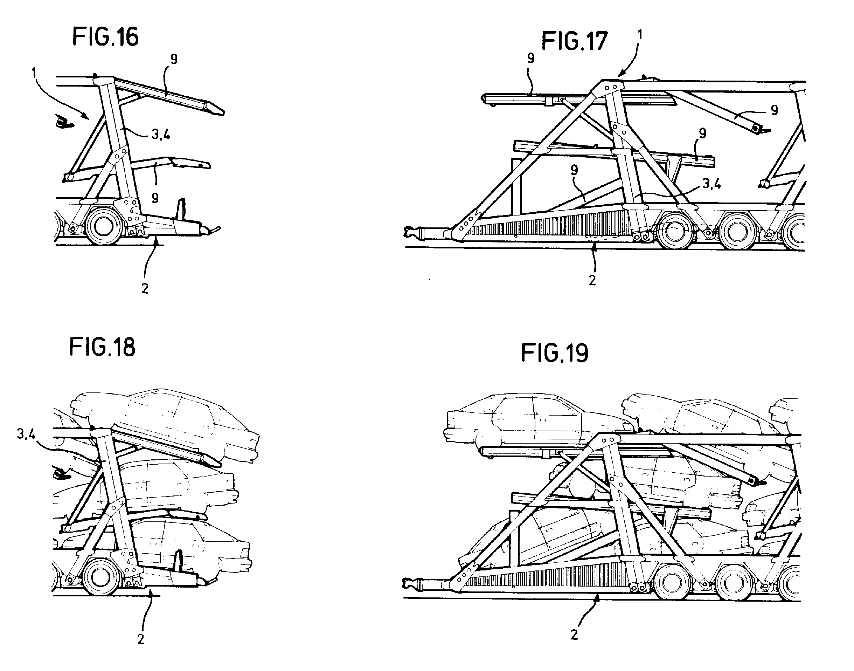

On a représenté sur les figures 14 et 15 une variante disposant d'un mécanisme supplémentaire de translation 37.

Cette variante procède du même concept général inventif selon lequel les mouvements du plateau porteur sont obtenus à partir d'une vis unique par poteau, vis entraînée en rotation par une force motrice unique.

Ainsi, selon cette variante, on obtient en plus des mouvements de déplacement du plateau transversalement aux poteaux porteurs.

Selon cette variante, les blocs, supérieur 14 et inférieur 15, sont réalisés sous la forme de deux écrous débrayables 38 et 39.

La liaison articulée 13 est une bielle de longueur fixe telle que celle déjà référencée 26.

La liaison porteuse entre le plateau et le poteau est du type à pivotement-coulissement par l'intermédiaire d'un coulisseau ou d'un patin 40 sur lequel se déplace un profilé de bordure 41 du plateau.

L'ensemble est complété par un mécanisme de coulissement 42 réalisé par une liaison articulée 43 sous la forme d'une bielle inclinée 44 articulée d'une part sur le plateau et d'autre part sur un bloc, par exemple, un écrou supérieur 45 analogue à ceux déjà décrits, établissant ainsi une triangulation supplémentaire référencée DAF, D étant l'articulation avec la vis et F avec le plateau.

Les mouvements en inclinaison et en déplacement du plateau le long des poteaux porteurs en regard résultent des commandes sélectives de mise en prise ou de débrayage des écrous débrayables 38 et 39.

Pour des raisons de programmation et de coordination des mouvements, on a assujetti directement les mouvements de coulissement du plateau à ceux de la vis par l'intermédiaire de l'écrou 45 et de la liaison articulée 43 de longueur constante.

La présence d'écrous débrayables permet d'obtenir et de sélectionner isolément tous les mouvements possibles du plateau :

. déplacement parallèle seul lorsque tous les écrous sont en prise;

. pivotement seul lorsque l'écrou inférieur est seul en prise;

. Coulissement seul lorsque les deux débrayables sont hors prise.

De plus, en jouant sur les commandes individuelles, on peut réaliser toutes les combinaisons des mouvements précédents.

Bien entendu, d'autres modes de fonctionnement s'avèrent possibles en substituant à l'écrou 45 les divers blocs examinés : douille de translation, écrou débrayable, et à la liaison 43 une bielle télescopique ou un vérin constituant son équivalent fonctionnel.

Comme on le voit sur les figures de 16 à 19, une des applications spécifiques concerne le chargement et le soutien de voitures pendant le transport sur un véhicule porte-voitures.

On comprend aisément que l'invention offre de multiples possibilités d'inclinaison des voitures en position de transport permettant de profiter du volume libre dans l'empattement, sous l'avant et sous l'arrière des véhicules transportés.

De plus, les inclinaisons des plateaux en positions extrêmes, haute et basse, peuvent être prédéterminées et identiques à chaque arrêt de la vis en fin de course de levage ou de descente.

Finalement, une seule commande suffit à mettre automatiquement en place une voiture dans sa position de transport tenant compte des positions relatives des autres voitures à charger en vue d'un coefficient de chargement maximal.

Les nombreux avantages de ces ensembles unitaires porteurs et de levage les destinent tout particulièrement aux véhicules porte-voitures.

## Revendications

1. Ensemble unitaire porteur et de levage pour véhicules automobiles, destiné à la constitution d'un véhicule porte-voitures, ensemble formé de deux poteaux de soutien (3) et (4) et d'un plateau mobile par rapport aux deux poteaux de soutien les deux poteaux de soutien (3) et (4) portant au moins un plateau individuel (9) caractérisé en ce qu'il est monté mobile sur et par rapport à ces poteaux en mouvements composés multiples en orientation et en position à partir d'une force motrice unique de commande par l'intermédiaire d'un mécanisme de liaison et porteur propre à chaque poteau et à chaque plateau, ledit mécanisme étant monté sur un élément rectiligne moteur unique propre à chaque poteau, entrainé par la force motrice unique de commande, ledit mécanisme comprenant un dispositif de translation (7) ou (8) mobile le long de et en prise constante ou sélective avec l'élément rectiligne moteur, dispositif de translation relié au plateau individuel par au moins une articulation et par au moins une liaison oblique articulée (13) en liaison avec des butées ou des arrêts de la force motrice afin de permettre et d'occuper pour les plateaux des positions multiples, par rapport aux poteaux, dont deux au moins d'entre elles sont des positions de présentations prédéterminées correspondant aux positions stables d'accès et de transport.

2. Ensemble unitaire selon la revendication 1 caractérisé en ce que le dispositif de translation (7) ou (8) propre à chaque poteau est formé d'un bloc supérieur (14) et d'un bloc inférieur (15) dont l'un au moins est en prise permanente ou sélective avec l'élément rectiligne moteur unique.

3. Ensemble unitaire selon les revendications 1 et 2 caractérisé en ce que l'élément rectiligne moteur unique est une vis (5) ou (6) actionnée en rotation par un moyen moteur unique.

4. Ensemble unitaire selon les revendications 1, 2 et 3 caractérisé en ce que le bloc en prise permanente avec la vis est un écrou (22) ou (33).

5. Ensemble unitaire selon les revendications 1, 2 et 3 caractérisé en ce que le bloc en prise sélective avec la vis est un écrou débrayable (34).

6. Ensemble selon les revendications précédentes caractérisé en ce que l'un des blocs est coulissant sur la vis sous la forme d'une douille de translation (17).

7. Ensemble unitaire selon les revendications 1, 2 et 3 caractérisé en ce que la liaison oblique (13) est une bielle articulée de longueur constante.

8. Ensemble unitaire selon les revendications 1, 2 et 3 caractérisé en ce que la liaison oblique est de longueur variable du type bielle télescopique (24) ou vérin.

9. Ensemble unitaire selon les revendications de 1 à 4 et 6, caractérisé en ce que les deux blocs sont assujettis entre eux par une liaison mécanique indéformable de longueur fixe.

10. Ensemble unitaire selon la revendication 9 caractérisé en ce que les deux blocs sont deux écrous (22) ou (33) entraînés par une vis.

11. Ensemble unitaire selon les revendications 9 et 10 caractérisé en ce que la liaison oblique (13) est de longueur constante.

12. Ensemble unitaire selon les revendications 9 et 10 caractérisé en ce que la liaison oblique (13) est de longueur variable du type bielle télescopique (24) ou vérin.

13. Ensemble selon les revendications 1 à 4 et 5, caractérisé en ce que le bloc supérieur (14) est un écrou débrayable (34) et le bloc inférieur un écrou (22).

14. Ensemble selon la revendication 13 caractérisé en ce que la liaison oblique est une bielle (26) de longueur constante.

15. Ensemble selon les revendications précédentes caractérisé en ce que la sous-face du plateau porteur entre en contact d'appui en position basse avec une butée basse (25) en vue de déterminer son inclinaison en position finale.

16. Ensemble selon les revendications précédentes caractérisé en ce que la face supérieure du plateau porteur entre en contact d'appui en position haute avec une butée haute (35) en vue de déterminer son inclinaison en position finale haute.

17. Ensemble selon les revendications précédentes caractérisé en ce que le dispositif de translation du mécanisme de liaison comporte trois blocs se déplaçant sur l'élément rectiligne moteur unique et en ce qu'au moins deux d'entre eux sont reliés au plateau par une liaison oblique (13) et (43), l'autre étant en liaison de pivotement-coulissement avec le plateau.

18.Ensemble selon la revendication 11 caractérisé en ce que la liaison de pivotement-coulissement est un patin ou coulisseau (40) sur lequel se déplace un profilé de bordure (41) du plateau individuel mobile (9), patin ou coulisseau portant l'axe de pivotement le reliant à l'autre bloc.

**Patentansprüche**

1. Einheitstrage- und Hebesatz für Kraftfahrzeuge zur Bildung eines Wagentransporters, wobei die Einheit aus zwei Tragepfosten (3) und (4) und einer in Bezug auf die beiden Tragepfosten beweglichen Tragebene gebildet ist und die beiden Tragepfosten (3) und (4) mindestens eine individuelle Tragplatte (9) tragen, **dadurch gekennzeichnet**, daß die individuelle Tragplatte auf und in Bezug auf die Pfosten für mehrfach kombinierte Bewegungen was Ausrichtung und Lage anbetrifft mit einer einzigen Antriebskraft mit Hilfe einer Verbindungs- und Trageinrichtung beweglich angeordnet ist, die jedem Pfosten und jeder Tragplatte eigen ist, wobei die besagte Einrichtung auf einem geradlinigen, jedem Pfosten eigenen Antriebselement montiert ist, das durch eine einzige Kontrollantriebskraft angetrieben wird, wobei die besagte Einrichtung eine Translationsvorrichtung (7) oder (8) umfaßt, die beweglich entlang dem gradlinigen Antriebselement montiert ist, und in ständigem oder selektivem Eingriff mit dem geradlinigen Antriebselement steht, wobei die Translationsvorrichtung der individuellen Tragplatte über mindestens ein Gelenk und durch mindestens eine schräge Gelenkverbindung (13) in Verbindung mit Anschlagplatten oder Anschlagbolzen der Antriebskraft steht, um es der Tragplatte zu gestatten, mehrere Positionen im Verhältnis zu den Pfosten einzunehmen, wobei mindestens zwei von diesen vorbestimmte Positionen sind, die stabilen Lagen für die Ladung und den Transport entsprechen.

2. Einheitssatz nach Anspruch 1, dadurch gekennzeichnet, daß die Translationsvorrichtung (7) oder (8), die jedem Pfosten eigen ist, aus einem oberen Block (14) und einem unteren Block (15) gebildet wird, von denen mindestens einer in ständigem oder selektivem Eingriff mit dem geradlinigen einzigen Antriebselement steht.

3. Einheitssatz nach einem der Ansprüche 1 oder 2, dadurch gekennzeichnet, daß das einzige geradlinige Antriebselement eine Schraube (5) oder (6) ist, die in der Drehung durch ein einziges Antriebsmittel angetrieben wird.

4. Einheitssatz nach einem der Ansprüche 1, 2 oder 3, dadurch gekennzeichnet, daß der in ständigem Eingriff mit der Schraube stehende Block eine Schraubenmutter (22) oder (33) ist.

5. Einheitssatz nach einem der Ansprüche 1, 2 oder 3, dadurch gekennzeichnet, daß der in selektivem Eingriff mit der Schraube stehende Block eine auskuppelbare Schraubenmutter (34) ist.

6. Einheit nach einem der vorstehenden Ansprüche, dadurch gekennzeichnet, daß einer der Blöcke in Gestalt einer Translationshülse (17) auf der Schraube verschiebbar ist.

7. Einheitssatz nach einem der Ansprüche 1, 2 oder 3, dadurch gekennzeichnet, daß die schräge Verbindung (13) ein gelenkig angebrachtes Pleuel konstanter Länge ist.

8. Einheitssatz nach einem der Ansprüche 1, 2 oder 3, dadurch gekennzeichnet, daß die schräge Verbindung variable Längen aufweist und vom Typ ausziehbares Pleuel (24) oder Zylinder ist.

9. Einheit nach einem der Ansprüche 1 bis 4 und 6, dadurch gekennzeichnet, daß die beiden Blöcke untereinander durch eine unverformbare mechanische Verbindung von feststehender Länge fest verbunden sind.

10. Einheitssatz nach Anspruch 9, dadurch gekennzeichnet, daß die beiden Blöcke zwei Schraubenmuttern (22) und (23) sind, die durch eine Schraube angetrieben werden.

11. Einheitssatz nach einem der Ansprüche 9 und 10, dadurch gekennzeichnet, daß die schräge Verbindung (13) von konstanter Länge ist.

12. Einheitssatz nach einem der Ansprüche 9 und 10, dadurch gekennzeichnet, daß die schräge Verbindung (13) von variabler Länge vom Typ ausziehbares Pleuel (24) oder Zylinder ist.

13. Einheit nach einem der Ansprüche 1 bis 4 und 5, dadurch gekennzeichnet, daß der obere Block (14) eine auskuppelbare Schraubenmutter (34) und der untere Block eine Schraubenmutter (22) ist.

14. Einheit nach Anspruch 13, dadurch gekennzeichnet, daß die schräge Verbindung ein Pleuel (26) konstanter Länge ist.

15. Einheit nach einem der vorstehenden Ansprüche, dadurch gekennzeichnet, daß die Unterseite der Tragplatte in der unteren Position mit einem unteren Anschlag (25) in einen Haltekontakt gelangt, um ihre Neigung in der Endposition zu bestimmen.

16. Einheit nach einem der vorstehenden Ansprüche, dadurch gekennzeichnet, daß die obere Fläche der Tragplatte in der oberen Position mit einem oberen Anschlag (35) in einen Haltekontakt gelangt, um ihre endgültige Neigung in der oberen Endposition zu bestimmen.

17. Einheit nach einem der vorstehenden Ansprüche, dadurch gekennzeichnet, daß die Translationsvorrichtung der Verbindungseinrichtung drei Blöcke umfaßt, die sich auf dem geradlinigen einzigen Antriebselement bewegen, und daß mindestens zwei von ihnen mit der Tragebene durch eine schräge Verbindung (13) und (43) verbunden sind, wobei der verbleibende in einer Kipp-schiebeverbindung mit der Tragplatte steht.

18. Einheit nach Anspruch 11, dadurch gekennzeichnet, daß die Kipp-Schiebeverbindung eine Kufe oder ein Schieber (40) ist, auf der sich ein Randprofil (41) der individuellen beweglichen Tragplatte (9) bewegt, wobei die Kufe oder der Schieber die Kippachse trägt, die sie/ihn mit dem anderen Block verbindet.

**Claims**

1. Carrying and lifting unit assembly for motor vehicles, for constituting a car-transporting vehicle, which assembly is formed by two supporting posts (3) and (4) and a platform which is movable relative to the two supporting posts, with the two supporting posts (3) and (4) carrying at least one individual platform (9), **characterised in that** the said platform is mounted in a movable manner on and relative to these posts with multiple composite movements for orientation and positioning by a single, control driving force by means of a connecting and carrying mechanism assigned to each post and each platform, the said mechanism being mounted on a single rectilinear drive unit assigned to each post and driven by the single, control driving force, the said mechanism comprising a translational motion device (7) or (8) which can move along, and be constantly or selectively engaged with, the rectilinear drive unit, which translational motion device is connected to the individual platform by at least one joint and by at least one jointed oblique connection (13) linked to abutments or stops for the driving force in order to enable the platform to occupy multiple positions relative to the posts, with two at least of these positions being predetermined presentation positions corresponding to the stable positions for access and transportation.

2. Unit assembly according to claim 1, characterised in that the translational motion device (7) or (8) assigned to each post is formed by an upper block (14) and a lower block (15), one at least of these blocks being permanently or selectively engaged with the single rectilinear drive unit.

3. Unit assembly according to claims 1 and 2, characterised in that the single rectilinear drive unit is a screw (5) or (6) actuated for rotation by a single drive means.

4. Unit assembly according to claims 1, 2 and 3, characterised in that the block permanently engaged with the screw is a nut (22) or (33).

5. Unit assembly according to claims 1, 2 and 3, characterised in that the block selectively engaged with the screw is a disengageable nut (34).

6. Assembly according to the preceding claims, characterised in that one of the blocks slides over the screw in the form of a sleeve (17) with translational motion.

7. Unit assembly according to claims 1, 2 and 3, characterised in that the oblique connection (13) is a link connection rod of a constant length.

8. Unit assembly according to claims 1, 2 and 3, characterised in that the oblique connection is of a variable length and of the telescopic connection rod type (24) or jack type.

9. Unit assembly according to claims 1 to 4 and 6, characterised in that the two blocks are firmly connected to each other by means of an undeformable mechanical connection of a fixed length.

10. Unit assembly according to claim 9, characterised in that the two blocks are two nuts (22) or (33) driven by a screw.

11. Unit assembly according to claims 9 and 10, characterised in that the oblique connection (13) is of a constant length.

12. Unit assembly according to claims 9 and 10, characterised in that the oblique connection (13) is of a variable length and of the telescopic connection rod type (24) or jack type.

13. Assembly according to claims 1 to 4 and 5, characterised in that the upper block (14) is a disengageable nut (34) and the lower block is a nut (22).

14. Assembly according to claim 13, characterised in that the oblique connection is a connection rod (26) of a constant length.

15. Assembly according to the preceding claims, characterised in that the underside of the carrying platform comes into bearing contact in the lower position with a lower stop (25) in order to determine its inclination in the final position.

16. Assembly according to the preceding claims, characterised in that the upper surface of the carrying platform comes into bearing contact in the upper position with an upper stop (35) in order to determine its inclination in the final upper position.

17. Assembly according to the preceding claims, characterised in that the device for the translational movement of the linking mechanism comprises three blocks moving over the single rectilinear drive unit, and in that at least two of these blocks are connected to the platform by an oblique connection (13) and (43), the other being connected in pivoting and sliding manner to the platform.

18. Assembly according to claim 11, characterised in that the pivoting and sliding connection is a runner or slide bar (40) over which there moves an edge bar (41) of the individual movable platform (9), with the runner or slide bar carrying the pivot shaft connecting it to the other block.

FIG.1

FIG.3

FIG.2

FIG.5

FIG.4

# FIG.6

# FIG.7

EP 0 345 187 B1

FIG.8

FIG.9

10,11

16,22

13

21

24

14

18

20

7,8

9

12

15

20

18

15

36

A

C

9

14

9

B

24

15

13

3,4

14

A

C

9

35

B

13

15

24

EP 0 345 187 B1

14

FIG.11

FIG.10

FIG.13

FIG.12

FIG.14

FIG.15

42
43
44
45
37
38
40
41
39
13
26

D
A
C
F
B

EP 0 345 187 B1

EP 0 345 187 B1

FIG.16

FIG.17

FIG.18

FIG.19